(19) **Europäisches Patentamt / European Patent Office / Office européen des brevets**

(11) **EP 2 800 834 B1**

(12) **EUROPEAN PATENT SPECIFICATION**

(45) Date of publication and mention
of the grant of the patent:
**30.05.2018 Bulletin 2018/22**

(21) Application number: **13701921.2**

(22) Date of filing: **04.01.2013**

(51) Int Cl.:
*E01C 7/30* (2006.01)  *E01C 11/00* (2006.01)
*E01C 23/06* (2006.01)  *C08G 18/10* (2006.01)
*C08G 101/00* (2006.01)  *C08G 18/20* (2006.01)

(86) International application number:
**PCT/EP2013/050092**

(87) International publication number:
**WO 2013/102653 (11.07.2013 Gazette 2013/28)**

(54) **FILLING OF CAVITIES IN ROAD CONSTRUCTION AND REPAIR**

FÜLLUNG VON HOHLRÄUMEN BEIM STRASSENBAU UND -REPARATUR

REMPLISSAGE DE CAVITÉS DANS LA CONSTRUCTION ET LA RÉPARATION DES ROUTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.01.2012 EP 12150203**

(43) Date of publication of application:
**12.11.2014 Bulletin 2014/46**

(73) Proprietor: **Soudal
2300 Turnhout (BE)**

(72) Inventors:
• **THYS, Luc
  B-2550 Kontich (BE)**
• **IRMEN, Norbert
  DE-56070 Koblenz (DE)**
• **GEBOES, Peter
  B-2630 Aartselaar (BE)**

(74) Representative: **Gevers Patents
Intellectual Property House
Holidaystraat 5
1831 Diegem (BE)**

(56) References cited:
WO-A2-2010/058036      DE-A1-102007 036 330
US-A- 5 092 706         US-A- 5 951 796

**Description**

FIELD OF THE INVENTION

The present invention relates to road construction and repair. More particularly, the invention relates to the use of a curing polymer binder in the filling of cavities in a road surface, a method for patching a cavity in a road surface top layer, and a kit of parts for the filling of a cavity in road construction and repair.

BACKGROUND OF THE INVENTION

An ongoing problem in road construction is the creation over time of holes, potholes, cracks and the like in the road surface. This is due to climatic conditions such as heat expansion and cold contraction, hot and cold cycles, and the like. Further problems may be caused by the infiltration of moisture, water, ice and/or snow, even worse when in combination with salt or other materials which are placed on the road for alleviating road icing problems. Solid materials may be pressed into the road surface, such as by passing traffic, and cause damage. Water or snow may seep into pores, and for instance by subsequent freezing and/or evaporation, cause damage such as by expansion.

These problems are well known in asphalt roads, but may equally occur in roads surfaced with other materials, such as concrete. They particularly frequently occur at the locations where the road surface top layer connects to an object made from a different material, because often a different thermal expansion of the road surface material as compared to the object material. These problems are relevant for road surface repair, but may equally apply to road construction, where at such connections the conventional joints may not be perfect in terms of tightness and reduction and/or avoidance of water seeping in, and where there is an interest in closing such joints and making such joints water tight. This may particularly be important on roads which are part of a bridge construction, closure of which roads for traffic is typically more detrimental to the fluidity of traffic in comparison with other roads.

It is important that such cavity imperfections in the road surface are filled quickly, or that such damage to the road surface is repaired in a timely manner, because once the road surface damaging process is given a chance to start, the cavity quickly may become larger due to the forces of the passing traffic, or by further actions of debris, water and/or salt.

Typically, holes and cracks in asphalt or concrete are filled and/or repaired by emplacing within the hole patching materials, such as more asphalt, which materials may be mixed with an adhesive, which usually is water-soluble, as well as other materials, including epoxy adhesive. However, because the patching material is substantially identical to or at least on the same basis as the asphalt mixture itself, the patch itself may not necessarily be more durable.

Known methods of road surface repair are for instance described in CA 2417737 A1, DE 20214435 U1 and DE 20214436 U1. CA 2417737 A1 discloses a method in which a dry mix, composed for instance of fresh quarried stones, recycled road planings and reinforcing fibers, is first mixed with an aqueous bitumen emulsion binder, and after agitation the resulting mixture is spread over the stone and/or aggregate in the repair material, followed by pouring the material and allowing it to set to form a repair on a roadway or pathway. DE 20214435 U1 and DE 20214436 U1 describe the use of a 2-component cold mix, containing mostly 2/5 mm stone chippings ("splitt") and 5-6% of a binder. The binder consists of 70-90% bitumen, 10-30% polymer bitumen, and 0.5-0.8% of a conventional adhesive.

A problem with these conventional repair methods and materials is that the adhesion of the patch materials with the original road surface top layer and/or its underground is often insufficiently strong, and also that the ingress of water into the patch materials and/or in between the patch and its surroundings is insufficiently prevented, in particular where the road surface connects to an object of a different material.

The object of the present invention is to improve the adhesion and to reduce the ingress of water into and around a patch which repairs a damaged road surface. The inventors have therefore explored the use of polyurethane in road repair.

US 3396641 discloses a method for the fabrication of composite traffic bearing surfaces, particularly useful in the reconditioning of highway surfaces, wherein on the cleaned and roughened surface a fluid adhesive bonding agent is sprayed. The bonding agents used are of the fluid epoxy resin type, but polystyrene, acrylic esters, resorcinol-formaldehyde, polyurethanes, polyester, phenolic and silicone resins are listed as possible alternatives.

DE 3836303 A1 discloses a method for applying a bituminous or asphalt-like surface layer onto an aged, possible damaged, roadway, in which after cleaning an epoxy resin with amines as hardener is sprayed onto the road surface, and left to penetrate during 30-120 minutes. Subsequently a hot asphalt with a temperature of 160-180°C is applied and immediately pressed on, at which time very quickly a strong adhesion is achieved between layers. DE 3836303 A1 states that also a bifunctional isocyanate with polyols as hardeners may be used, but prefers the epoxy resins because they are moisture insensitive.

US 4877829 discloses the application of a bridge deck membrane (BDM) before laying down a protective layer of asphalt, with the purpose to inhibit penetration of liquid water down to the concrete surface of the bridge and/or to inhibit the attack from air- or moisture-borne industrial chemicals, de-icing salt, and atmospheric carbon dioxide onto the alkaline materials in the concrete and the reinforcement therein. The BDM is obtained by applying a two-component mixture containing polyols (A) and polyisocyanate (B), either by spreading by hand or by spraying by a conventional air spray gun, onto the concrete surface, and allow it to become tack-free and cured within minutes. Moisture is thereby preferably avoided, or scavenged with molecular sieves, in order to inhibit foaming.

US 5 092 706 A discloses a method for filling or patching a cavity in a road surface top layer by applying a layer of composite tack to the inner surface of the cavity, and applying a layer of filling material, which is an asphalt patch onto the composite tack to form at least part of a road patch. GB 1180689 describes a road surface structure comprising a layer of insulating material underneath a poured concrete or bituminous sufficient load bearing capacity for highway applications. The concrete or bituminous surface layer may then be poured on the foam layer as soon as the foam has hardened sufficiently to carry the weight of the surface layer. GB 1180689 proposes the use of rigid PU foam as an insulating layer in road construction.

PU foams have been proposed also for other applications. EP 148969 for instance, proposes the use of polyurethane foam compositions impregnated with liquid asphalt, for the filling of joints in housing, vehicles and construction works.

US 5951796 discloses a two component polyurethane adhesive. Upon mixing of the two components, a foam is formed which expands upon application to the substrate and which collapses after the material to be bonded is placed in contact with the foam. US 5951796 further proposes a method of bonding of construction materials to various construction substrates by using said adhesive.

JP 2004324047A discloses a floor slab paving method involving the use of a block isocyanide urethane prepolymer as chief component in a waterproof reactive adhesive layer between the floor slab and an asphalt layer.

KR 576918 discloses a method for road repair wherein an adhesive layer or primer, made with urethane based polymer, is placed on the cleaned and dried road surface to be repaired using a brush or a roller, followed by forming on the adhesive layer a repair layer containing silica sand, urethane toner, hardener and urethane adhesives. After leveling up the applied repair materials, in a further step high-temperature steam, containing hardener and hardening accelerator, may be injected to harden the urethane adhesives quickly.

Also JP 2088802 A discloses a road repair involving a material prepared by adding 1-50 wt parts epoxy-modified polyol resin, together with an isocyanate compound, to 100 wt parts of aggregate. This material is packed into the places to be repaired already coated with a primer, and hardened.

These methods still suffer from the disadvantage that the adhesion of the road repair materials with the substrate or underground upon which they are applied may be further improved. This problem has already been addressed by using polyurethane foam materials in road repair.

NL 7200992 proposes, for a quick road repair or road surface building, to foam an expanding high density hard-foam, based on polyurethane, PVC or polystyrene, into potholes of 8 m diameter and 3 m deep, or onto an ill-supporting underground. In order to improve resistance to wear, it is proposed to reinforce the surface with metal mats, preferably which they are applied may be further improved. This problem has already been addressed by using polyurethane foam materials in road repair.

NL 7200992 proposes, for a quick road repair or road surface building, to foam an expanding high density hard-foam, based on polyurethane, PVC or polystyrene, into potholes of 8 m diameter and 3 m deep, or onto an ill-supporting underground. In order to improve resistance to wear, it is proposed to reinforce the surface with metal mats, preferably embedded into the foam, and to provide an even higher density foam as upper layer. NL 7200992 proposes to use a two component (2K) PU foam formulation, containing the necessary stabilisers, including suitable foam stabilisers, because the hard foam should have a closed cell structure.

US 2007/0093566 A1 is concerned with infrastructure repair, even underwater, and geo-stabilization processes. Proposed is to use water-blown foam made from a low-exotherm polyurethane composition, such that the concern of heat accrual is greatly reduced. A suitable aqueous solution of an alkali metal silicate ("waterglass") may be included in the polyurethane composition used, in order to improve the heat resistance of the foam, whereby compact or closed-cell materials are prepared with concentrated silicate solutions, and open-cell lightweight foams may be obtained with lower concentration silicate solutions. Foam stabilizers and cell regulators, which in this case must be cell stabilisers, are listed as suitable additives.

US 2009/087262 A1 discloses the use of a polyurethane foam material in the repair of potholes in a road surface. Firstly rods or stakes are secured as securing devices in the pothole, by embedding these into the bottom or the sidewall of the pothole. Subsequently a reinforcing material is affixed to the fixed rods or stakes. The reinforcing material should provide reinforcement and/or strength to the foam material, and may be any mesh or wire configuration, made out of metal, synthetic material, rope, fabric, or plastic wood. In the next step, a foam material is added to the pothole for encapsulating the rods or stakes and the mesh or wire material. Surfacing compounds are considered optional, such as dirt, paints, asphalt or other coating, to be disposed on top of the installed foam material. The reinforced foam may then be made level to the surface of the roadway. Critical in US 2009/087262 A1 is that the foam material provides the quick set, strength and durability for roadways and the like. US 2009/087262 A1 teaches that the foam material should be a polyurethane and/or polyisocyanurate closed-cell foam, preferably a two component (2K) PU foam formulation, preferably containing cell stabilizers, such as silicone oils.

US 3,981,831 discloses a number of compositions containing a high amount of an aqueous sodium water glass solution, several of which foam up upon application, forming a regular pore structure, as compared to the collapsing comparison example. When no blowing agents were used, in most cases pore-free macroscopically homogeneous inorganic-organic plastics are obtained that were rock hard but have a high impact elasticity. According to US 3,981,831 the foaming mixtures as covered may also be used, e.g. in road building, as adhesives, mortars or casting compositions, with or without inorganic or organic fillers. The hardened foams produced are however very porous after drying, and are then able to reabsorb water.

Several of the methods described above still suffer from the need that also inhibition of the ingress of water into the repaired road surface may be further improved. Ingressing water represents a multitude of problems, an important one being the stress brought by the volume increase of water when it freezes.

The foams proposed in the above described methods demonstrate an improved adhesion power compared to many available alternatives. The inventors have however found that this strong adhesive power may be significantly further improved.

The present invention aims to obviate or at least mitigate the above described problem and/or to provide improvements generally.

## SUMMARY OF THE INVENTION

According to the invention, there is provided the use of a curing polymer foam composition for the filling of cavities in road construction and/or in repair of a damaged road surface, a method for patching a cavity in a road surface top layer, and a kit of parts for road repair as defined in any of the accompanying claims.

More particularly, the invention provides the use of a polyurethane foam composition for the filling of cavities in road construction and/or in road repair, whereby preferably the foam substantially collapses after expansion and whereby a granulate filler material is applied onto the foam. In another embodiment, the invention provides for a method for the filling of a cavity in road construction and/or in road repair which method comprises the incorporation of a polyurethane foam composition in the cavity, whereby the foam substantially collapses after expansion. In the context of the present invention, a foam composition is a composition which is able to foam up upon being dispensed. A foam composition according to the present invention is thus a foaming composition when it is being dispensed. The foam composition or foaming composition according to the present invention substantially collapses after expansion.

In another embodiment, the invention provides a method for patching an opening in a road surface top layer, comprising the steps of

a) applying a layer of polyurethane foam composition to the inner surface of the opening, at least a band of the inner surface approaching the perimeter of the opening, optionally also at least part of the inner surface which is surrounded by the band,
b) applying a layer of granulate filler material onto the layer of polyurethane foam from step b) to form at least part of a road patch, if necessary pressing the filler material into the polyurethane foam composition and/or equalizing the layer of filler material such that it does not significantly exceed beyond the level of the road surface,
c) optionally repeating steps b) and c) until the opening in the road surface top layer is at least substantially filled,
d) optionally removing any excess of filler material, and
e) optionally equalizing the surface of the road patch,

whereby the foam substantially collapses after expansion.

PU foam has already several times been proposed recently for replacing mortar in the building industry, for example in US 4315391, WO 1998/010030, WO 2004/079116A1, EP2064298 and WO 2011/113587 A2. Its use as a binder in road construction and repair, and in kits intended for that purpose has also been suggested in NL 7200992, US 2007/0093566 A1, US 3981831 and US 2009/0087262 A1. These documents propose the use of polyurethane foam compositions primarily for their volume filling effects, in addition to its adhesive forces, and therefore relate to the benefits of the expansion of the compositions into a regular, structural and typically closed cell foam, which should in most of the documents be reinforced with other reinforcing materials in order to provide the desired strength.

The present invention has found that the collapsing composition according to the present invention results in a much stronger adhesive bond between any solid elements introduced into the cavity and the walls and bottom of the cavity in which they are introduced. The applicants have found that the adhesive power of the resulting collapsed foam is an order of magnitude higher than this of a typical polyurethane foam. The applicants have found that a PU foam, even when it ends up having a regular closed cell structure, in due course develops a significant absorption capacity for water, which brings for road repair an undesirably high degree or level of water permeability, because of the damage that such water may cause to the repair work.

The firstly foaming and subsequently collapsing polyurethane foam according to the present invention brings the advantage that it ultimately provides a layer of cured polymer which is strongly adhering to its surroundings, but which is also fully impermeable or impervious to water. This provides a patch for the cavity which upon curing is substantially insensitive to water damage, such as frost damage and the like, and which thus enjoys a much longer expected useful life time.

We have found that the polyurethane (PU) foam composition according to the present invention is particularly suitable for filling a cavity in road construction and/or in road repair, such as in repairing or patching up a damaged road surface. The PU foam, because of its expansion after application from a pressurized container, is pushed into the pores, cracks and crevices into the sides and bottom of the cavity into which it is applied. We have found that these pores cracks and crevices become much better and deeper filled thanks to the action of the propellants in the foam composition. By applying the granulate filler material onto the PU foam before it is fully cured, and while it may already be collapsing , and thus while this is still somewhat liquid, also improves the contact of the granulates with the PU material. As a result, it creates a stronger adhesive bond with the surrounding road surface and/or the underground thereof, as compared to non-foaming compositions but also as compared to PU foaming compositions which do not collapse after foaming.

The PU foam composition according to the present invention is selected such that the foam substantially again collapses after expansion. Upon collapse of the foam, the density of the overall patching material increases, the adhesive bonds become much stronger. Thereby the adhesive bond between the patching material and the surrounding road surface and/or the underground thereof is improving significantly, typically by an order of magnitude.

Another advantage is that the PU composition according to the present invention at least partly and preferably entirely cures by the reaction with water. The curing PU therefore is able to pick up any moisture and even free water which may be present in the hole which is to be patched and/or in the pores, cracks and crevices of the sides and/or the bottom of such hole. By picking up and removing this water, the expanding foam is able to penetrate further into such pores, cracks and crevices, thereby forming extra anchor points for the adhesive layer and thus further strengthening the adhesive bond with the surrounding road surface and/or the underground thereof. The resulting cured polymer layer thus builds a water impermeable or impervious volume which extends much further into the pores and cracks of the surroundings of the patch. The present invention thereby improves the integration of the patch with its surroundings, as well as the longevity of the adhesion of the patch to the cavity it is filling.

Another advantage of the use of PU material is that the cured polyurethane is impermeable or impervious for water. This brings the effect that water is unable to penetrate the PU and thus cannot migrate to locations where it may collect and cause damage to the repaired area.

Yet another advantage is that the cured PU retains some elasticity after curing. If water would find its way into the patch and would locally expand, the elasticity of the cured PU composition impairs the damaging action which the expansion could bring to the collapsed foam.

An additional advantage is that the PU foam composition may typically be applied without any preheating, unlike some alternatives, such as bitumen, which are not as well self-curing and may need to be heated for facilitating their application.

Yet another advantage is that the PU foam composition may be provided in a pressure container, from which it may readily be dispensed, such as by using the pressure in the container, which brings a significant ease of application which differentiates the present invention from many of its alternatives.

In another embodiment, the invention provides for a kit of parts comprising an amount of a granulate filler material and a pressure container containing a polyurethane foam composition. Such kit of parts contains all the necessary for the filling of a cavity in road construction and/or in road repair, and is very convenient for the individual consumer who has a cavity to fill in his driveway or access road.

DETAILED DESCRIPTION

The present invention will be described in the following with respect to particular embodiments and with possible reference to certain drawings but the invention is not limited thereto but only by the claims. Any drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention may operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

In the context of the present invention, the prefix "poly" is used for meaning "more than one", which when limited to integers is the same as "2 or more" or "at least 2". The term "polyol" therefore stands for a compound having at least 2 alcohol or hydroxyl (-OH) functional groups. The term "polyisocyanate" thus stands for a compound having at least 2 isocyanate (NCO or more correctly -N=C=O) functional groups.

In the context of this invention, the prefix "tri- and higher" means "3 or more" or "at least 3".

A polyurethane (PUR or PU) is a polymer composed of a chain of organic units joined by the carbamate or urethane link. PU polymers are formed through step-growth polymerization, by reacting one or more monomers having at least two isocyanate functional groups with at least one other monomer having at least two isocyanate reactive groups, i.e. functional groups which are reactive towards the isocyanate function. The isocyanate (-N=C=O or "NCO") functional group is highly reactive and is able to react with many other chemical functional groups. In order for a functional group to be reactive to an isocyanate functional group, the group typically has at least one hydrogen atom which is reactive to an isocyanate functional group. Most frequently compounds are used having at least two hydroxyl or alcohol groups. Where di-isocyanate molecules are reacting with other difunctional molecules, linear polymers are formed. Where at least one of the isocyanates or one of the other molecules has three or more functional groups, the polymer structure is able to cross-link and form three-dimensional structures. The structures with a low degree of cross-linking lead to the more elastic products. For adhesives on the other hand, polymer structures with ultimately a high degree of cross-linking are preferred.

The reaction of an isocyanate monomer with a second reactant may be favoured by the presence of one or more catalysts. Suitable catalysts are amine compounds, typically tertiary amines, and organometallic compounds.

Also water is reactive towards the isocyanate function, and typically plays a role in the final curing of the polymer towards the formation of an ultimately rigid structure. The final "curing" of the polyurethane polymer, which may include further chain building as well as cross-linking, is often obtained at least partly by reaction with water, such as with atmospheric moisture or with moisture present in the substrate onto which the PU formulation is applied. An isocyanate functional group may react with water followed by liberating gaseous $CO_2$ to form a primary amine, a functional group which is able to react at least once with more isocyanate functional groups. This mechanism thus also may lead to cross-linking in the polymer. Thanks to this mechanism a polyurethane polymer structure with residual isocyanate functionality is able to cure or harden under the influence of atmospheric moisture, and depending on mixture viscosity at the same time may even foam further.

In a one component system, a polyurethane foam pressure container may for instance be prepared by introducing a mixture of towards isocyanate polyfunctional reactive compounds, typically higher molecular weight polyols and more typically polyether polyols, together with a stoichiometric excess of polyfunctional isocyanates into the can and give it sufficient time and shaking to mix the can content and have it react until all isocyanate reactive functions are substantially reacted away and substantially only isocyanate functions remain available. The so-formed viscous liquid mixture in the can is usually called a "prepolymer". Propellant gasses may be added, optionally together with the reactants listed above, to provide a pressure in the can, if desired. When using liquefied gasses such as LPG-type components or dimethyl ether (DME) as the propellants, these gasses may also act as a solvent for the other components in the mixture.

The application of the polyurethane then typically consists of releasing the viscous prepolymer mixture from the pressurized can and let it cure, in a one component foam formulation (OCF) by the reaction with atmospheric moisture and optionally also with water from a wet or moist substrate. The propellant gasses, together with the liberating $CO_2$, may provide a foaming effect upon the expansion of the prepolymer liquid to atmospheric pressure. The addition to the mixture of a stabilizer may help as such component may act as a nucleator for starting the formation of gas bubbles, into which the propellants and the $CO_2$ may then migrate. The curing reactions further increase the viscosity of the reacting mixture, which eventually sets as a solid polyurethane. The rate of curing may be much faster than the rate at which the gasses are able to escape from the solidifying mixture, such that a solid foam structure is obtained. Alternatively, the composition may be made to collapse faster than the composition is able to cure, in which case hardly any foam structure is remaining.

In a two component system, the prepolymer with its remaining isocyanate functionality is at the moment of application mixed with a second component containing a hardener, i.e. a polyfunctional isocyanate reactive compound, typically a low molecular weight polyol, preferably having primary alcohol functions, which is introduced from a second container. The result is usually a very fast curing mixture forming a high density product with high mechanical properties. Optionally some water may be added to the polyol, which causes $CO_2$ to form, and in which case propellants may not be essential in order to obtain some foam structure.

The acronym MDI is in the PU industry used for diphenylmethane diisocyanate, also called methyl diphenyl diisocyanate or methylene diphenyl diisocyanate, and this may include methyl or methylene diphenyl-4,4'-diisocyanate, also known as methane diphenyl-4,4'-diisocyanate, 1-isocyanato-4-[(4-isocyanatophenyl)methyl] benzene, 4,4'-diphenylmethane diisocyanate and 4,4'-methylene diphenyl diisocyanate, together with its 2,4' and 2,2' isomers, or may also be used for the 4,4'-MDI monomer as a single isomer, or for a blend of two of the three isomers, such as a mixture of the 4,4' and the 2,4' isomer. In the context of the present invention, the terms mMDI, monomeric MDI and MDI monomer are used in its broadest sense, covering all of these possible compositions of the methane diphenyl diisocyanate monomers.

In the context of the present invention, with crude MDI or polymeric MDI (pMDI) is meant a mixture of polyfunctional isocyanate monomers having a different number of phenyl isocyanate functions. The methyl diphenyl diisocyanate monomer with its two phenyl cores typically makes up close to half of the mixture, the rest being 3-core, 4-core, 5-core, and higher monomers, each phenyl core offering one isocyanate functionality. The average functionality of crude MDI or pMDI is typically about 2.7.

In an embodiment of the present invention, the polyurethane foam composition contains less than 1.00 wt% of free methyl diphenyl diisocyanate (MDI) monomer, whereby the concentration is expressed relative to the total weight of the foam composition. This brings the advantage that the PU foam composition raises less concerns related to possible irritant, allergenic and/or toxic effects of the MDI free monomer. It also brings the advantage that under particular legislation, such as under recent EU legislation, the use of an R40 risk phrase on packages containing the PU foam formulation may be avoided.

In an embodiment of the present invention, the low free MDI monomer content is obtained by employing the PU foam composition at least partly on polyisocyanate or on a prepolymer which has a low content of MDI monomer. Various methods are known to the skilled person for obtaining low residual levels of free MDI in the formulation, thereby reducing the concerns associated with using polyurethane formulations, and where possible, at least avoiding the R40 risk phrase. Suitable disclosures may be for instance be found in WO 03/006521, describing the use of asymmetric polyisocyanates, WO 2007/115971, which describes the removal of a major portion of the diisocyanate molecules from the pMDI mixture before forming the prepolymer, or in WO 00/04069, WO 2011/036018 and WO 01/014443, describing the removal of diisocyanate monomers from the prepolymer by distillation.

In an embodiment of the present invention, the low free MDI monomer content is obtained by introducing a towards isocyanate monofunctional reactive compound in the preparation of the PU foam formulation, in particular in the preparation of the PU prepolymer composition comprised in the PU foam composition. A suitable disclosure may be found in our copending international patent application with application number PCT/EP2012/072642, filed 14 November 2012. The towards isocyanate monofunctional reactive compound reacts with MDI monomer and forms MDI monomers of which at least one of the two isocyanate functional groups has been reacted with a towards isocyanate monofunctional reactive compound. In one embodiment of the present invention, the polyurethane foam composition contains at least 0.4 wt% total of methyl diphenyl diisocyanate monomers of which at least one of the two isocyanate functional groups has been reacted with a towards isocyanate monofunctional reactive compound, whereby the concentration is also expressed relative to the total weight of the foam composition.

Preferably the composition contains at least 0.5 wt% total of methyl diphenyl diisocyanate monomers of which at least one of the two isocyanate functional groups has been reacted with a towards isocyanate monofunctional reactive compound, preferably at least 1.0 wt%, more preferably at least 2.0 wt%, even more preferably at least 5.0 wt%, yet more preferably at least 7.0 wt%, preferably at least 8.0 wt%, more preferably at least 9.0 wt%, even more preferably at least 10.0 wt%, yet more preferably at least 12.0 wt%, preferably at least 15.0 wt%, more preferably at least 20 wt%, and optionally at most 62 wt%, preferably at most 60 wt%, more preferably at most 55 wt%, even more preferably at most 50 wt%, yet more preferably at most 45 wt%, preferably at most 40 wt%, more preferably at most 35 wt%, even more preferably at most 30 wt%, yet more preferably at most 25 wt%, and this on the same basis.

In the context of the present invention, the isocyanate index for a PU formulation is defined as:

$$\text{Isocyanate index} = \frac{\text{Actual amount of isocyanate used}}{\text{Theoretical amount of isocyanate required}} \times 100$$

The isocyanate index is the ratio of the equivalent amount of isocyanate used relative to the theoretical equivalent amount required, which is often being expressed as a percentage and possibly even without mentioning the percentage indicator. The isocyanate index is calculated relative to the total inventory of towards isocyanate reactive functional groups present, thus including the towards isocyanate monofunctional reactive compounds as well as the towards isocyanate polyfunctional reactive compounds.

In an embodiment of the present invention, the polyurethane foam composition comprises a polyurethane prepolymer composition.

In another embodiment of the present invention, the polyurethane prepolymer composition is having an isocyanate index expressed relative to all the towards isocyanate reactive functional groups involved in forming the polyurethane prepolymer composition, of at least 105 and at most 1000, preferably at least 200 or at least 400, more preferably at least 500, even more preferably at least 600 and optionally and possibly alternatively at most 1000, preferably at most 950, more preferably at most 900, even more preferably at most 850, yet more preferably at most 800, preferably at most 750, even more preferably at most 700, yet more preferably at most 675, even more preferably at most 650.

In order to further strengthen the adhesive forces of the ultimate PU composition with the environment and with the granulate filler material, the applicants prefer to use tri- and higher functional compounds into the prepolymer of the PU foam composition of the present invention. This increases the cross-linking in the ultimate polyurethane layer and increases the adhesion bonding with the various surrounding substrates. In an embodiment of the present invention, the applicants prefer that the polyurethane prepolymer composition according to the present invention is at least partly based on a towards isocyanate trifunctional reactive compound.

The equivalent weight of an isocyanate containing compound, mixture or sample is defined as the average weight of the compound, mixture or sample per isocyanate active site or isocyanate functional group. This may readily be calculated, even for an unknown sample, from the isocyanate (NCO) functional group content, which may for instance be analyzed by titration according to ASTM 5155 or ISO 14896, whereby the result is expressed in wt% NCO, as follows:

$$\text{equivalent weight isocyanate} = 4200\ /\ \%NCO$$

where %NCO is the analyzed isocyanate (NCO) content expressed in wt% NCO of the sample.

For a known compound, hence with known functionality, the equivalent weight is defined as the molecular weight divided by the number of NCO functions per molecule of the compound. For mixtures of known compounds, the equivalent weight may be calculated per compound, from which if needed an equivalent weight for the mixture may be derived.

The equivalent weight of a polyol containing compound, mixture or sample is defined as the average weight of the compound, mixture or sample per reactive hydroxyl (OH) site or, for a single polyol compound, as the molecular weight of the polyol compound divided by its functionality. The equivalent weight of a polyol containing sample may readily be calculated from the analyzed hydroxyl (OH) number, as follows:

$$\text{equivalent weight polyol} = 56100\ /\ \text{OH number}$$

where OH number is the analyzed hydroxyl (OH) content according to method ASTM 4274 or ISO 14900 and expressed in mg KOH/g of sample.

In a recipe or formulation, the number of equivalents for each reactive compound or component may then be calculated as follows: parts by weight of the component / equivalent weight for the component.

In an embodiment of the present invention, the PU foam composition is characterised by an equivalents ratio of the towards isocyanate monofunctional reactive compounds relative to the amount of the isocyanate functional groups initially present of at least 6.5 %. Preferably this equivalents ratio is at least 7.0 %, preferably at least 8.0 %, more preferably at least 10.0 %, even more preferably at least 12.0 %, yet more preferably at least 13.0 %, preferably at least 14.0 %, more preferably at least 15.0 %, even more preferably at least 16.0 %, yet more preferably at least 17.0 %, preferably at least 18.0 %, more preferably at least 19.0 %, even more preferably at least 20.0 %, yet more preferably at least 21.0 %. This equivalents ratio is defined as the ratio of the total functionality of towards isocyanate reactive groups contributed by the towards isocyanate monofunctional reactive compound or compounds, relative to the total isocyanate functionality contributed by all the polyisocyanates present in the starting materials. Optionally this equivalents ratio is at most 50%, preferably at most 45%, more preferably at most 40%, even more preferably at most 35%, yet more preferably at most 30%, preferably at most 25.0%, more preferably at most 24.0%, even more preferably at most 23.0%, yet more preferably at most 22.0%.

The container according to the present invention may contain either a one component (1K) or a two component (2K) PU foam formulation, or also a so-called 1.5 component (1.5K) system.

In the case of the one-component formulations (1K, also known as one component foam (OCF)), the moisture reactive groups of the dispensed prepolymer cure almost exclusively by reaction with atmospheric moisture. This reaction is usually accompanied by cross-linking and possibly an extra increase in volume.

In case of 2-component (2K) systems, chemical curing is achieved via reaction of the reactive groups with the second reactive component, usually amines, water or hydroxyfunctional molecules. The curing reaction is usually faster, such that 2K systems are more suitable for producing a higher density foam.

With so-called 1.5 component (1.5K) foams a hydroxy or amine component or a mixture thereof is added to the prepolymer, shortly or immediately before being dispensed and in such an amount that at least partial conversion of all NCO groups is achieved. Further moisture curing may then be achieved after dispensing. This 1.5 component system brings the advantage that the curing of the applied foam is significantly faster, such that the foam may be cut or trimmed more quickly after the application thereof, which is of convenience for the user, particularly for the professional user. A further advantage of the 1.5 component foam system is that the foam reaches a higher final density, which provides better mechanical properties, such that this foam is particularly suitable for construction purposes, and e.g. may be used for mounting window frames and doors even without needing nails, screws or bolts. Yet another advantage is that 1.5K foam shows much less expansion upon application. It is therefore easier to dose more accurately than 1K systems, which leads to less waste and after care. These 1.5K systems, as well as 2K systems, are also much less sensitive to low moisture substrates or environments, and are therefore more suitable than 1K systems for use in rather dry environments.

Suitable polyisocyanates for use in the present invention are aliphatic, cycloaliphatic, and aromatic polyisocyanates. Suitable products are for instance produced by BAYER, BASF/ELASTOGRAN, HUNTSMAN, YANTAI WANHUA, and others, and are offered under tradenames such as Desmodur, Lupranate, Suprasec, Wannate. Other possible candidates, however where applicable within the limits as specified, may be isophoron diisocyanate (IPDI), toluene diisocyanate (TDI), 1,5-diisocyanato naphthalene (NDI), tri-iso-cyanato trimethylmethane, 1,6-diisocyanato hexane (HDI), and 2,4- or 4,4'-di-isocyanato diphenyl methane (MDI). All these isocyanates, their isomers or derivatives (e.g. biurete and allophanate adducts) may be used as such or as a combination thereof. Preferably aromatic diisocyanates may be used, such as 4,4'-, 2,4'- and 2,2'-diphenylmethane diisocyanates, polymethylene polyphenyl isocyanates, mixtures of 4,4'-, 2,4'- and 2,2'-diphenylmethane diisocyanates and polymethylene polyphenyl isocyanates (Polymeric MDI, pMDI. The isocyanates may be modified as would be readily understood by those skilled in the field of polyurethane foam chemistry, so long as the selected isocyanates react with the polyol or polyol blend to create a final foam product which has the desired properties obtainable with the present invention.

In the context of the present invention the polyurethane prepolymer composition is preferably based on a polyisocyanate mixture which comprises, based on the weight of the polyisocyanates, at least 20 wt% of methyl diphenyl diisocyanate monomer or monomeric MDI or mMDI. In another embodiment, these polyisocyanates comprise at least 23 wt% of the monomeric MDI, preferably at least 25 wt%, more preferably at least 27.5 wt%, even more preferably at least 30 wt%, yet more preferably at least 32, preferably at least 33.5 wt%, more preferably at least 34.0 wt%, even more preferably at least 35.0 wt%, yet more preferably at least 36.0 wt%, preferably at least 38.0 wt%, more preferably at least 39.0 wt%, even more preferably at least 40.0 wt% and yet more preferably at least 41.0 wt% monomeric MDI. Optionally the starting polyisocyanate mixture comprises at most 60 wt% monomeric MDI, preferably at most 55 wt%, more preferably at most 50 wt%, even more preferably at most 48.0 wt%, yet more preferably at most 46.0 wt%, preferably at most 45.0 wt%, more preferably at most 44.0 wt% and even more preferably at most 43.0 wt% monomeric MDI.

In the context of the present invention the polyurethane prepolymer composition is preferably based on a polyisocyanate mixture which comprises, based on the weight of the polyisocyanates, at most 24 wt% of toluene diisocyanate monomer (TDI). In another embodiment, the initial polyisocyanate mixture comprises at most 23 wt% of the monomeric TDI, preferably at most 22 wt%, more preferably at most 20 wt%, even more preferably at most 18 wt%, yet more preferably at most 16 wt%, preferably at most 15.0 wt%, more preferably at most 12.0 wt%, even more preferably at most 10.0 wt%, yet more preferably at most 8.0 wt%, preferably at most 6.0 wt%, more preferably at most 4.0 wt%, even more preferably at most 2.0 wt% and yet more preferably at most 1.00 wt% monomeric TDI. Most preferably the resulting compositions according to the present invention do not contain any measureable amount of monomeric TDI.

In yet another embodiment, the polyurethane foam composition according to the present invention further comprises, expressed on the same basis, at least one and possibly all of the following:

a) the at least one propellant or blowing agent in a total propellant concentration of at least 5 %wt, preferably at least 10 %wt, more preferably at least 15wt%, even more preferably at least 20 wt%, yet more preferably at least 23 wt% and optionally and possibly alternatively at most 40 %wt, preferably at most 35 %wt, more preferably at most 30 %wt, yet more preferably at most 28 wt%,

b) at least one plasticizer and/or flame retardant in a total plasticizer and flame retardant concentration of at least 0.5 wt%, preferably at least 1.0 wt%, more preferably at least 2.0 wt%, preferably at least 4.0 wt%, more preferably at least 6.0 wt%, even more preferably at least 8.0 wt%, yet more preferably at least 10.0 wt% and optionally and possibly alternatively at most 20.0 wt%, preferably at most 17.0 wt%, more preferably at most 14.0 wt%, yet more preferably at most 12.0 wt%.

The propellant brings the advantage of quickly building foam upon application, which drives the composition into all cracks, crevices, and openings of the surrounding substrates, and hence improves the penetration of the composition into those substrates, thereby increasing the adhesive bond between all elements.

The composition according to the present invention preferably also contains an amount of at least one cell opener. A cell opener brings the advantage that the foam may collapse, such as after penetrating into openings and crevices, thereby forming a thin but strong adhesive layer or membrane, and that the foam may collapse faster as compared to a foam without such cell opener. Suitable cell openers include paraffin or silicon oils, silicone-free polymers based on polyvinyl alkyl ether with a foam-inhibiting effect for example BYK-051, -052 and -053 from BYK-Chemie GmbH, silicon-containing polymers like Tegostab B-8871, Tegostab B-8934, Tegostab 8935, Niax L-6164, Struksilon 8101, Struksilon 8002, available from resp. Goldschmidt, GE Silicones, Schill & Seilacher. Mechanical cell opening may also be achieved by incorporating solids, for example talcums, calcium carbonates, and the like. Defoaming additives in low levels are also possible. The cell opening additives are typically added in quantities of 0.01 to 2, preferably 0.1 to 1 wt % (as such or as combinations thereof), expressed relative to the total foam composition.

The propellants or blowing agent according to the present invention are preferably selected from the group consisting of $C_1$-$C_4$ saturated hydrocarbons, preferably propane and/or butane and/or isobutane, dimethyl ether (DME), a chlorofluorocarbon or a hydrochlorofluorocarbon, preferably R152a or R134a or trans-1,3,3,3-tetrafluoropropene (also known as HFO-1234ze), and mixtures thereof.

The propellants are suitably available from a large number of suppliers. HFO-1234ze is a blowing agent obtainable from the company Honeywell.

The plasticizers are preferably selected from the group consisting of phosphates or chloroparaffins, which often exhibit at the same time also flame retardant properties, but may also be esters, preferably diesters, such as adipates, phthalates, cyclohexanoates, preferably those of alcohols having at least 4 and preferably at least 7 carbon numbers, such as of isononyl alcohol. Suitable examples of phosphates are triethyl phosphate (TEP), trichloropropyl phosphate (TCCP), and tripotassium phosphate (TKP). Suitable chlorinated paraffins are readily obtainable, such as Cereclor™ S42 and others from INEOS. Also mixtures of these compounds may be used. Plasticizers such as the diesters mentioned, e.g. diisononyl adipate, may be obtained from suppliers including BASF, Evonik or ExxonMobil Chemical. Triethyl phosphate (TEP) may be obtained from Lanxess company. Also higher molecular weight monoesters may be used, such as isononylbenzoate (INB) obtainable from Evonik. Another suitable compound may be 2,2,4-Trimethyl-1,3-Pentanediol Diisobutyrate (TXIB) obtainable from Eastman.

Suitable flame retardants may be selected from the group of halogenated, in particularly brominated, ethers from the type "Ixol" from the company Solvay, 3,4,5,6-tetrabromo-, 2-(2-hydroxyethoxy)ethyl-2-hydroxypropyl ester), organic phosphates, in particular diethyl-ethane phosphonate, triethyl phosphate (TEP), tetrabromo phthalate ester (available under product name DP45 from the company Great Lakes), dimethyl propyl phosphonate, diphenyl cresyl phosphate, as well as chlorinated phosphates, in particular tris-(2-chloroethyl)phosphate, tris-(2-chloroisopropyl)phosphate, tris-(1,3-dichloroisopropyl)-phosphate, tris-(2,3-dibromopropyl)phosphate and tetrakis-(2-chloroethyl)-ethylene diphosphate, and mixtures thereof. Preferred are those which do not have free hydroxyl groups, in order not to affect the amount of NCO functions present.

The composition according to the present invention may also contain one or more flame retardants. Useful flame retardants include, without limitation, any compound with flame suppression properties and which may be dissolved or dispersed in the polyurethane foam. These include compounds such as chlorinated or brominated phosphates, phosphonates, inorganic oxides and chlorides, red phosphor, expandable grafite, and the like. Preferably, the flame retardant is a soluble liquid such as triethyl phosphonate, pentabromo diphenyl oxide, and most preferably is tris(2-chloro isopropyl) phosphate (TCPP). Other suitable flame retardants may be tetrabromo bisphenol A bis (allylether), tetrabromo phtalic anhydride, a tetrabromo phthalate ester, tricresyl phosphate, tris-(2-chloro-1-(chloromethyl)ethyl)phosphate, triphenyl phosphate, and tris-(1-chloro-2-propyl) phosphate, and triethyl phosphate.

In another embodiment, the polyurethane foam composition according to the present invention is further comprising an amount of cell opener. This brings the advantage that the collapsing of the foam may be further controlled and timed relative to its initial and thus previous expansion, whereby the balance between the degree of penetration into the cracks and crevices of the surroundings, and/or into those of any filler which may be added, relative to the ultimately obtainable adhesion forces, may be controlled.

In another embodiment, the composition according to the present invention is further comprising at least one additive selected from the group consisting of one or more catalysts, such as 2,2'-Dimorpholino Diethyl Ether (also called DMDEE), preferably from 0.1 to 5.0 wt%, more preferably from 0.5 to 2.0 wt%, one or more flame retardants or flame proofing agent, preferably from 5 to 20 wt%, more preferably from 10 to 15 wt%, a solvent, a viscosity depressant or viscosity reducer, a UV stabilizer, a cell opener or cell opening additive, the cell opener preferably from 0.1 to 2.0 wt%, and mixtures thereof, whereby the concentrations are expressed relative to the total foam composition.

Other suitable catalysts comprise all known compounds which may catalyse isocyanate reactions. Examples are titanates, such as tetrabutyl titanate or tetrapropyl titanate of tetraisopropyl titanate, and mixtures thereof. Other examples are tin carboxylates, such as dibutyl tin dilaurate (DBTL), dibutyl tin diacetate, tin octoate, tin oxide such as dibutyl tin oxide and dioctyl tin oxide, organoaluminum compounds such as aluminum tris acetyl acetonate, aluminum tris ethyl aceto acetate, chelate compounds such as titanium tetra acetyl acetonate, amine compounds such as triethylene diamine, guanidine, diphenyl guanidine, 2,4,6-tris(dimethyl amino methyl) phenol, morpholine, N-methyl morpholine, 2-ethyl-4-methyl imidazole, N,N-dimethyl piperazine, 1,8 diazabicylco[5.4.0]undec-7-ene, dimorpholino dimethyl ether, dimorpholino diethyl ether (DMDEE). Also mixtures of these compounds may be used, and may be preferred. The concentration thereof may be in the range of 0.01 to 5 wt% of the total composition.

The foam composition according to the present invention preferably further comprises a catalyst, such as an amine catalyst, to accelerate the reaction of the compounds in the mixture containing reactive hydrogen atoms and isocyanate groups in the phase of prepolymer formation, and to accelerate the moisture curing reaction after the reaction mixture is extruded. The amine catalyst may comprise a primary, secondary or tertiary amine, with tertiary amine catalysts being particularly preferred. Examples of suitable catalysts are dimethylethanol amine (DMEA), tetramethyl imino bispropyl amine (available as Polycat® 15 from the company Air Products), N,N-dimethyl cyclohexyl amine (DMCHA), tetraethylene diamine (Dabco/TEDA), organometallic compounds such as tin mercaptide, dibutyltin dilaurate (DBTDL), and the like. Most preferably, the amine catalyst is a dimorpholine compound such as dimorpholino polyethylene glycol (PC Cat® 1 KSC available from the company Nitroil), 2,2'-dimorpholino diethylether (DMDEE), with 2,2'-dimorpholino diethylether being particularly preferred.

In another embodiment, the invention involves a pressure container containing the polyurethane foam composition according to the present invention. Such pressure container provides an easy assurance that the foam composition does not prematurely come in contact with moisture and would start curing prematurely. The pressure container is also very convenient for applying the PU foam composition. This may happen with a handheld method, such as the method described in WO 2012/052449 or in WO 2011/151295. Alternatively, the foam composition may be applied by a method employing a dispenser gun, such as the method described in WO 2011/151295, preferably the method described in WO 2011/151296.

In an embodiment of the composition according to the present invention, which may be the polyurethane foam composition or the polyurethane prepolymer composition possibly existing as an intermediate to the final composition, the towards isocyanate monofunctional reactive compound is selected from the group consisting of all nucleophiles, including an alcohol, preferably a primary alcohol, a secondary amine, a thiol, an acid, and mixtures thereof. The inventors prefer to use a monofunctional alcohol compound as the towards isocyanate monofunctional reactive compound according to the present invention.

In another embodiment of the present invention, in the composition which may be the polyurethane foam composition or the polyurethane prepolymer composition, the towards isocyanate monofunctional reactive compound is selected from the group consisting of a saturated alkyl alcohol, an aryl alcohol, an alkylaryl alcohol, the primary, secondary and tertiary variants thereof, preferably the primary or the secondary and more preferably the primary variant thereof, a polyol of which all except one alcohol functional group has been etherified with a monofunctional alcohol or esterified with a monobasic acid, the alkoxylated derivatives thereof, and mixtures of at least two of any of the listed compounds.

In yet another embodiment of the composition according to the present invention, which may be the polyurethane foam composition or the polyurethane prepolymer composition, the towards isocyanate monofunctional reactive compound is selected from the group consisting of the C1-C36 aliphatic primary alcohols, linear (i.e. straight chain) and branched, preferably at least C2, more preferably at least C3, even more preferably at least C4, yet more preferably at least C5, preferably at least C6 or C7, more preferably at least C8, amongst the C8 alcohols 2-ethyl hexanol being even more preferred, and optionally at most C24, preferably at most C22 or C20, more preferably at most C18, amongst the C18 stearic alcohol being even more preferred, yet more preferably at most C14, amongst which mixtures of C12 and C14 linear alcohols are the more preferred, and mixtures thereof.

Any mixtures of towards isocyanate monofunctional reactive compounds may be mixtures of molecules having linear structures, also known as straight chain structures, and/or of molecules having branched structures. When mixtures are used of towards isocyanate monofunctional reactive compounds having different carbon numbers, the inventors prefer that the weight average carbon number of the compounds is comprised within the specified ranges.

In yet another embodiment of the present invention, the polyurethane prepolymer composition is further based on at least one polyisocyanate monomer selected from the group consisting of 3-core, 4-core, 5-core phenyl isocyanate monomers, and mixtures thereof, preferably the polyurethane prepolymer composition being based on crude methyl diphenyl diisocyanate (crude MDI) or polymeric (pMDI).

The selection of crude MDI or pMDI brings the advantage that this raw material is more readily available at a more acceptable cost, such that it brings an economic advantage. It is also the raw material which is most common in the PU industry, such that the implementation of the present invention brings the least changes to an already existing and conventional production facility. The other advantage, as compared to pure MDI monomer as a starting material, is that in the starting material the pure monomeric MDI is already diluted, which makes the target of achieving the desired low concentrations of residual free methyl diphenyl diisocyanate monomer more readily achievable.

In another embodiment of the present invention, the towards isocyanate polyfunctional reactive compound used in preparing the prepolymer is selected from a polyol and a polyol mixture. The inventors prefer to use polyether polyols, usually made by the reaction of epoxides (oxiranes) with a starter compound having an active hydrogen atom. Suitable examples thereof are for instance P400 diol obtainable under the tradename Voranol P400 or other diols like Voranol P1010 or Voranol P2000, all available from the Dow Company. Also suitable are polyester polyols, usually made from the polycondensation (i.e. polyesterification) of multifunctional carboxylic acids with multifunctional hydroxyl compounds. Suitable examples are the Isoexter® type products available from the company COIM, the Polios® type products available from the company Purinova, the Stepanpol® type products available from Stepan Company, and the Hoopol® type products available from the company Synthesia.

Suitable polyols for use in the present invention are polyether or polyester polyols known for the production of polyurethane elastomeric adhesives and sealants, rigid, semi-rigid, flexible and froth foams. The polyether/polyester polyols may also contain amine groups. The polyol preferably has an average molecular weight of 400 to 4500 and a functionality, which means an average functionality in case of mixtures, most conveniently a weight average but alternatively a molar average, of from 2 to 4, preferably from 2 to 3. Preferably the foam and/or prepolymer composition of this invention contains one single polyol, although a mixture of two or more different polyols may be used as well.

The applicants have found that the present invention is suitable for the filling of a cavity or the patching of a damage in the road surface top layer, whereby the top layer may be made from a wide variety of hard materials. The applicants have found that the present invention is particularly suitable when the road surface top layer is an asphalt layer or a concrete layer.

The present invention relates to road construction and repair by patching selective areas. The method is less suitable for road reconditioning, whereby a new top layer is applied onto an aged, possible damaged, roadway. The present invention is primarily directed to the smaller scale application which patches road damaged areas or other cavities in road construction, preferably as soon as possible after they have become noticed. Small road cavities or damages are the start for fast deterioration by water ingress, salt, and may quickly spread if not repaired immediately. The present invention is preferably applied before such additional damage becomes excessive. Thanks to its simplicity of application, and the high curing rate of the PU, such that the road becomes useable very quickly after the application, the present invention is very well suited for such small scale "emergency repair" tasks. Because of the fast curing rate of the PU, and optionally its controllable collapsing rate, the present invention is more suitable for these small scale applications, as compared to the larger scale applications such as road reconditioning.

The present invention is therefore preferably applied for filling a road surface cavity and/or repairing road surface damage which is limited in size. Preferably the smallest dimension of the volume of the cavity or damage which needs to be repaired is at most 0.5 meter, more preferably at most 0.4 meter, even more preferably at most 0.3 meter, yet more preferably at most 0.25 meter, more preferably at most 0.20 meter, even more preferably at most 0.15 meter, yet more preferably at most 0.10 meter, and preferably at most 0.07 meter. This limitation in its smallest dimension, which may be width, length or depth, does not necessarily imply any limitation with respect to the two other dimensions of the volume of the cavity to be filled or the damage to be repaired.

The applicants however prefer that also one of the other two dimensions of the volume of the cavity or damage which needs to be filled or repaired is limited, because they have found that the effects of the present invention are thereby enhanced. In another embodiment therefore, the second smallest dimension of the volume of the cavity or damage which needs to be filled or repaired is at most 1.0 meter, more preferably at most 0.8 meter, even more preferably at most 0.6 meter, yet more preferably at most 0.5 meter, more preferably at most 0.40 meter, even more preferably at most 0.30 meter, yet more preferably at most 0.20 meter, and preferably at most 0.10 meter.

The applicants have found that the present invention is particularly useful where the road is part of a bridge construction. These roads are typically more critical for the fluidity of traffic as compared to other roads, because a bypass is typically lengthy or hardly available. When such roads are blocked, even if only partially, the negative effects on traffic flow are usually much higher as compared to when the same occurs with other roads. The advantages brought by the present invention, such as the short period after the intervention after which the road may be again made available for traffic, and the longer life time of the road surfaces containing the treated cavities thanks to the improved water resistance, are very important for roads part of a bridge construction.

The applicants have found that the present invention is particularly useful for filling or patching a cavity, or for repairing damage, in a road surface top layer at locations where two different materials are joined. Thanks to the excellent adhesion and elasticity provided by the cured PU binder, the patch material is better resisting the particular forces which may occur at such joints, such as caused by differences in thermal expansion between different materials.

In an embodiment of the present invention, the cavity to be filled occurs where the road surface connects to an object made from a material different from the material of the road surface, such as a metal, polymeric, composite, ceramic or concrete material, the object preferably being selected from a gutter, a post, a curbstone, a drain cover, a manhole cover, a handhole cover, an inspection hole cover, a cattle grid, a sewer grid and a tile.

In an embodiment of the present invention, the polyurethane foam composition is contained in a pressure container, and is dispensed therefrom. This brings significant convenience to the person performing the actions, as the composition may be applied without needing much additional equipment. The dispensing may occur by means of a dispensing gun, or a handheld applicator, the latter preferably being delivered together with the pressure container.

In an embodiment of the present invention, the pressure container is supplied together with at least one and preferably a pair of gloves, suitable for protecting the hands of the user from direct contact with the PU foam composition before this is fully cured.

In an embodiment of the method according to the present invention, the method further comprises , prior to step a), the step of removing any debris from the cavity, preferably removing any substances or parts which are insufficiently attached to the road surface top layer or to the underground thereof. This additional step brings the advantage that the adhesion of the PU foam to the fixed substrates around it is further improved. It is however a feature of the present invention that the behaviour of the composition, more particularly the expansion and later collapsing thereof, reduce the need for cleanliness of the cavity into which the patch based on the composition is to be introduced.

In another embodiment, the method according to the present invention further comprises, prior to step a), the step of removing any excess water from the cavity. This reduces the risk that the PU foam composition cures too fast, which would impair its penetration in the surrounding substrate, and/or its collapse into the preferred strongly adhesive and water impervious polymer layer. This feature further frees up room in the pores of the substrate, for the PU foam composition to penetrate before it cures.

In an embodiment of the method according to the present invention, the filler material is mixed with an additional binder, the additional binder preferably being chosen from the group consisting of asphalt and bitumen.

In another embodiment of the method according to the present invention, the polyurethane foam composition is provided from a pressure container, as described above. This brings the advantages already listed in that context above.

In an embodiment of the kit of parts according to the present invention, the kit further comprises an applicator gun or a handheld applicator suitable for dispensing the polyurethane foam composition from the pressure container.

In another embodiment, the granulate filler material in the kit is of a mineral nature. This brings the advantage that the filler material absorbs less of the PU foam composition, such that more of the composition remains available for penetrating the surrounding substrate, for surrounding the filler material, and for building the connection with the bottom and/or walls of the cavity being filled, hence further improving the adhesive bond between the filler material and the substrate surrounding the cavity.


ANALYTICALS

The applicants refer for analytical methods, which are to be used in the context of the present invention, to our copending international patent application with application number PCT/EP2012/072642, filed 14 November 2012.


**Claims**

1.    Use of a polyurethane foam composition for the filling of a cavity in road construction and/or in road repair, whereby the foam substantially collapses after expansion and whereby a granulate filler material is applied onto the foam.

2.    The use according to claim 1 for the filling of a cavity or the patching of a damage in the road surface top layer.

3.    The use according to claim 2 wherein the road surface top layer is an asphalt layer or a concrete layer.

4.    The use according to any one of the preceding claims whereby the road is part of a bridge construction.

5.    The use according to any one of the preceding claims whereby the cavity to be filled occurs where the road surface connects to an object made from a material different from the material of the road surface, such as a metal, polymeric, composite, ceramic or concrete material, the object preferably being selected from a gutter, a post, a curbstone, a drain cover, a manhole cover, a handhole cover, an inspection hole cover, a cattle grid, a sewer grid and a tile.

6.    The use according to any one of the preceding claims whereby the composition comprises an amount of at least one cell opener.

7.    The use according to any one of the preceding claims wherein the polyurethane foam composition contains at least one propellant, preferably two or more propellants, and preferably in a total propellant concentration of at least 5 wt% and optionally and possibly alternatively at most 40 wt%.

8. The use according to any one of the preceding claims wherein the polyurethane foam composition further comprises at least one additive selected from the group consisting of one or more catalysts, such as 2,2'-Dimorpholino Diethyl Ether (also called DMDEE), preferably from 0.1 to 5.0 wt%, more preferably from 0.5 to 2.0 wt%, one or more flame retardants or flame proofing agent, preferably from 5 to 20 wt%, more preferably from 10 to 15 wt%, a solvent, a viscosity depressant or viscosity reducer, a UV stabilizer, and mixtures thereof, whereby the concentrations are expressed relative to the total foam composition.

9. A method for filling and/or patching a cavity in a road surface top layer, comprising the steps of

a) applying a layer of polyurethane foam composition to the inner surface of the cavity, at least to a band of the inner surface approaching the perimeter of the cavity, optionally also at least part of the inner surface which is surrounded by the band,
b) applying a layer of granulate filler material onto the layer of polyurethane foam from step b) to form at least part of a road patch, if necessary pressing the filler material into the polyurethane foam composition and/or equalizing the layer of filler material such that it does not significantly exceed beyond the level of the road surface,
c) optionally repeating steps b) and c) until the cavity in the road surface top layer is at least substantially filled,
d) optionally removing any excess of filler material, and
e) optionally equalizing the surface of the road patch,

whereby the polyurethane foam composition is as defined in any one of the preceding claims.

10. The method according to claim 9 comprising, prior to step a), the step of removing any debris from the cavity, preferably removing any substances or parts which are insufficiently attached to the road surface top layer or to the underground thereof.

11. The method according to claim 9 or 10 comprising, prior to step a), the step of removing any free water from the cavity.

12. The method according to any one of claims 9-11 wherein the filler material is mixed with a second binder, the second binder preferably being chosen from the group consisting of asphalt and bitumen.

13. The method according to any one of claims 9-12 wherein the polyurethane foam composition is provided from a pressure container.

14. A kit of parts for the filling of a cavity in road construction and/or in road repair comprising an amount of a granulate filler material and a pressure container containing a polyurethane foam composition as defined in any one of claims 1-8.

15. The kit of parts according to the preceding claim further comprising an applicator gun or a handheld applicator suitable for dispensing the polyurethane foam composition from the pressure container.

**Patentansprüche**

1. Anwendung einer Polyurethanschaumzusammensetzung zur Füllung eines Hohlraums in Straßenbau und/oder in Straßenreparatur, wobei der Schaum im Wesentlichen nach Expansion zusammenfällt und wobei ein Granulatfüllmaterial auf den Schaum aufgetragen wird.

2. Die Anwendung nach Anspruch 1 zur Füllung eines Hohlraums oder zur Ausbesserung eines Schadens in der Straßenbelagdeckschicht.

3. Die Anwendung nach Anspruch 2, wobei die Straßenbelagdeckschicht eine Asphaltschicht oder eine Betonschicht ist.

4. Die Anwendung nach irgendeinem der vorigen Ansprüche, wobei die Straße Teil einer Brückenkonstruktion ist.

**5.** Die Anwendung nach irgendeinem der vorigen Ansprüche, wobei der zu füllende Hohlraum auftritt, wo der Straßenbelag an einen Gegenstand anschließt, der aus einem anderen Material als das Material des Straßenbelags hergestellt ist, wie ein Metall-, Polymer-, Verbund-, Keramik- oder Betonmaterial, wobei der Gegenstand bevorzugt aus einem Rinnstein, einem Pfahl, einem Randstein, einem Abflussdeckel, einem Mannlochdeckel, einem Handlochdeckel, einem Schaulochdeckel, einem Gitterrost, einem Abflusskanalgitter und einer Bodenplatte ausgewählt ist.

**6.** Die Anwendung nach irgendeinem der vorigen Ansprüche, wobei die Zusammensetzung eine Menge von zumindest einem Zellöffner umfasst.

**7.** Die Anwendung nach irgendeinem der vorigen Ansprüche, wobei die Polyurethanschaumzusammensetzung zumindest ein Treibmittel umfasst, bevorzugt zwei oder mehr Treibmittel, und bevorzugt in einer gesamten Treibmittelkonzentration von mindestens 5 Gew.-% und optional und möglicherweise alternativ höchstens 40 Gew.-%.

**8.** Die Anwendung nach irgendeinem der vorigen Ansprüche, wobei die Polyurethanschaumzusammensetzung ferner zumindest einen Zusatz ausgewählt aus der Gruppe bestehend aus einem oder mehreren Katalysatoren, wie 2,2'-Dimorpholinyldiethylether (auch DMDEE genannt), bevorzugt von 0,1 bis 5,0 Gew.-%, noch besser von 0,5 bis 2,0 Gew.-%, einem oder mehreren Flammschutzmitteln oder Flammhemmern, bevorzugt von 5 bis 20 Gew.-%, noch besser von 10 bis 15 Gew.-%, einem Lösungsmittel, einem Viskositätsreduziermittel oder Viskositätssenker, einem UV-Stabilisator, und Mischungen davon umfasst, wobei die Konzentrationen in Bezug auf die gesamte Schaumzusammensetzung ausgedrückt sind.

**9.** Ein Verfahren zur Füllung und/oder Ausbesserung eines Hohlraums in einer Straßenbelagdeckschicht, welches folgende Schritte umfasst:

a) Auftragen einer Schicht von Polyurethanschaumzusammensetzung auf die innere Oberfläche des Hohlraums, zumindest auf einen Streifen der inneren Oberfläche nahe des Umfangs des Hohlraums, optional auch zumindest einen Teil der inneren Oberfläche, welcher durch den Streifen umgeben ist,
b) Auftragen einer Schicht von Granulatfüllmaterial auf die Schicht von Polyurethanschaum aus Schritt b), um zumindest einen Teil eines Straßenflecken zu bilden, bei Bedarf Pressen des Füllmaterials in die Polyurethanschaumzusammensetzung und/oder Egalisieren der Schicht von Füllmaterial, sodass es nicht signifikant über das Niveau des Straßenbelags hinausragt.
c) optional Wiederholen der Schritte b) und c), bis der Hohlraum in der Straßenbelagdeckschicht zumindest im Wesentlichen gefüllt ist,
d) optional Entfernen von eventuell überschüssigem Füllmaterial, und
e) optional Egalisieren der Oberfläche des Straßenflecken,

wobei die Polyurethanschaumzusammensetzung ist, wie definiert in irgendeinem der vorigen Ansprüche.

**10.** Das Verfahren nach Anspruch 9, welches, vor Schritt a), den Schritt des Entfernens von jeglichem Geröll aus dem Hohlraum umfasst, bevorzugt Entfernen jeglicher Substanzen oder Teile, die unzureichend an der Straßenbelagdeckschicht oder deren Untergrund befestigt sind.

**11.** Das Verfahren nach Anspruch 9 oder 10, welches, vor Schritt a), den Schritt des Entfernens von jeglichem freien Wasser aus dem Hohlraum umfasst.

**12.** Das Verfahren nach irgendeinem der Ansprüche 9 bis 11, wobei das Füllmaterial mit einem zweiten Bindemittel vermischt wird, wobei das zweite Bindemittel bevorzugt aus der Gruppe bestehend aus Asphalt und Bitumen ausgewählt wird.

**13.** Das Verfahren nach irgendeinem der Ansprüche 9 bis 12, wobei die Polyurethanschaumzusammensetzung aus einem Druckbehälter bereitgestellt wird.

**14.** Ein Satz von Teilen zur Füllung eines Hohlraums in Straßenbau und/oder in Straßenreparatur, welcher eine Menge von Granulatfüllmaterial und einen Druckbehälter umfasst, der eine Polyurethanschaumzusammensetzung, wie definiert in irgendeinem der Ansprüche 1 bis 8, enthält.

**15.** Der Satz von Teilen nach dem vorigen Anspruch, welcher ferner eine Auftragsspritze oder einen handgeführten Applikator umfasst, geeignet zur Abgabe der Polyurethanschaumzusammensetzung aus dem Druckbehälter.

**Revendications**

1.  Utilisation d'une composition de mousse en polyuréthane pour le remplissage d'une cavité en construction de voies et/ou en réparation de voies, moyennant quoi la mousse s'affaisse sensiblement après expansion et moyennant quoi un matériau de remplissage en granulé est appliqué sur la mousse.

2.  Utilisation selon la revendication 1 pour le remplissage d'une cavité ou le colmatage d'un dégât dans une couche supérieure de surface de voie.

3.  Utilisation selon la revendication 2, dans laquelle la couche supérieure de surface de voie est une couche en asphalte ou une couche en béton.

4.  Utilisation selon l'une quelconque des revendications précédentes, moyennant quoi la voie fait partie d'une construction de pont.

5.  Utilisation selon l'une quelconque des revendications précédentes, moyennant quoi la cavité à remplir se trouve là où la surface de voie se raccorde à un objet réalisé en un matériau différent du matériau de la surface de voie, tel qu'un matériau en métal, polymérique, composite, céramique ou béton, l'objet étant de préférence choisi parmi un caniveau, un poteau, une bordure de trottoir, un couvre-drain, une plaque d'égout, une plaque de visite, une plaque de trou d'inspection, une grille à bétail, une grille d'égout et un carreau.

6.  Utilisation selon l'une quelconque des revendications précédentes, moyennant quoi la composition comprend une quantité d'au moins un agent d'ouverture de cellules.

7.  Utilisation selon l'une quelconque des revendications précédentes, dans laquelle la composition de mousse en polyuréthane contient au moins un agent propulseur, de préférence deux agents propulseurs ou plus, et de préférence dans une concentration totale en agent propulseur d'au moins 5 % en poids et facultativement et éventuellement en variante d'au plus 40 % en poids.

8.  Utilisation selon l'une quelconque des revendications précédentes, dans laquelle la composition de mousse en polyuréthane comprend en outre au moins un additif choisi dans le groupe constitué d'un ou plusieurs catalyseurs, tels que le 2,2'-dimorpholino diéthyl éther (également dénommé DMDEE), de préférence 0,1 à 5,0 % en poids, de manière davantage préférée de 0,5 à 2,0 % en poids, un ou plusieurs retardateurs de flamme ou matériaux ignifugeants, de préférence de 5 à 20 % en poids, de manière davantage préférée de 10 à 15 % en poids, un solvant, un abaisseur de viscosité ou réducteur de viscosité, un stabilisant anti-UV, et des mélanges de ceux-ci, moyennant quoi les concentrations sont exprimées par rapport à la composition totale de mousse.

9.  Procédé de remplissage et/ou de colmatage d'une cavité dans une couche supérieure de surface de voie, comprenant les étapes de :

    a) application d'une couche de composition de mousse en polyuréthane à la surface intérieure de la cavité, au moins à une bande de la surface intérieure approchant le périmètre de la cavité, facultativement également au moins une partie de la surface intérieure qui est entourée de la bande,
    b) application d'une couche de matériau de remplissage en granulé sur la couche de mousse en polyuréthane de l'étape b) pour former au moins une partie d'un tronçon de voie, si nécessaire pressage du matériau de remplissage dans la composition de mousse en polyuréthane et/ou égalisation de la couche de matériau de remplissage de sorte qu'elle ne dépasse pas de façon significative au-delà du niveau de la surface de la chaussée,
    c) facultativement répétition des étapes b) et c) jusqu'à ce que la cavité dans la couche supérieure de surface de voie soit au moins sensiblement remplie,
    d) facultativement élimination de tout excédent de matériau de remplissage, et
    e) facultativement égalisation de la surface du tronçon de voie,

    moyennant quoi la composition de mousse en polyuréthane est telle que définie à l'une quelconque des revendications précédentes.

**10.** Procédé selon la revendication 9 comprenant, avant l'étape a), l'étape d'élimination de tous débris de la cavité, de préférence l'élimination de toutes substances ou parties qui sont insuffisamment fixées à la couche supérieure de surface de voie ou à sa partie souterraine.

**11.** Procédé selon la revendication 9 ou 10 comprenant, avant l'étape a), l'étape d'élimination de toute eau libre de la cavité.

**12.** Procédé selon l'une quelconque des revendications 9 à 11, dans lequel le matériau de remplissage est mélangé à un second liant, le second liant étant de préférence choisi dans le groupe constitué de l'asphalte et du bitume.

**13.** Procédé selon l'une quelconque des revendications 9 à 12, dans lequel la composition de mousse en polyuréthane est fournie à partir d'un contenant sous pression.

**14.** Kit de pièces pour le remplissage d'une cavité en construction de voie et/ou en réparation de voie comprenant une quantité d'un matériau de remplissage en granulés et un récipient sous pression contenant une composition de mousse en polyuréthane telle que définie à l'une quelconque des revendications 1 à 8.

**15.** Kit de pièces selon la revendication précédente, comprenant en outre un pistolet applicateur ou un applicateur à main approprié pour distribuer la composition de mousse en polyuréthane à partir du contenant sous pression.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CA 2417737 A1
- DE 20214435 U1
- DE 20214436 U1
- US 3396641 A
- DE 3836303 A1
- US 4877829 A
- US 5092706 A
- GB 1180689 A
- EP 148969 A
- US 5951796 A
- JP 2004324047 A
- KR 576918
- JP 2088802 A
- NL 7200992
- US 20070093566 A1
- US 2009087262 A1
- US 3981831 A
- US 4315391 A
- WO 1998010030 A
- WO 2004079116 A1
- EP 2064298 A
- WO 2011113587 A2
- US 20090087262 A1
- WO 03006521 A
- WO 2007115971 A
- WO 0004069 A
- WO 2011036018 A
- WO 01014443 A
- EP 2012072642 W
- WO 2012052449 A
- WO 2011151295 A
- WO 2011151296 A